# EUROPÄISCHE PATENTSCHRIFT

(11) **EP 1 364 739 B1**
(45) Veröffentlichungstag und Bekanntmachung des Hinweises auf die Patenterteilung: **07.11.2007**
(21) Anmeldenummer: 03009569.9
(22) Anmeldetag: 28.04.2003
(51) Int. Cl.: B23K 20/12

(54) **Reibrührschweissen von Bauteilen, insbesondere von Hohlkammerprofilen**
Friction stir welding of hollow section members
Soudage par friction et agitation des profilés creux allongés

(30) Priorität: 21.05.2002 DE 10222430
(43) Veröffentlichungstag der Anmeldung: 26.11.2003
(73) Patentinhaber: SIEMENS AKTIENGESELLSCHAFT, 80333 München (DE)
(72) Erfinder: Aretz, Walter, 41065 Mönchenglsdbach (DE); Calomfirescu, Mihail, 45359 Essen (DE)

(56) Entgegenhaltungen:
- PATENT ABSTRACTS OF JAPAN vol. 1999, no. 12, 29. Oktober 1999 (1999-10-29) -& JP 11 192564 A (NIPPON LIGHT METAL CO LTD), 21. Juli 1999 (1999-07-21)
- PATENT ABSTRACTS OF JAPAN vol. 2000, no. 25, 12. April 2001 (2001-04-12) -& JP 2001 225178 A (HITACHI LTD), 21. August 2001 (2001-08-21)
- PATENT ABSTRACTS OF JAPAN vol. 1998, no. 13, 30. November 1998 (1998-11-30) -& JP 10 202374 A (SHOWA ALUM CORP), 4. August 1998 (1998-08-04)
- PATENT ABSTRACTS OF JAPAN vol. 2000, no. 01, 31. Januar 2000 (2000-01-31) -& JP 11 285864 A (HITACHI LTD), 19. Oktober 1999 (1999-10-19)

## Beschreibung

Die Erfindung betrifft das Reibrührschweißen von Hohlkammerprofilen, mit Hilfe eines Werkzeugs, das eine gegen die Schweißzone der zu verbindenden Bauteile pressbare Stirnfläche und eine Rührspitze aufweist, wobei die Schweißzone hohlkammerseitig von einem in die Hohlkammerprofile eingeschobenen Hilfsprofil abgedeckt ist.

Bei dem Reibrührschweißen (Friction Stir Welding) wird die Stirnfläche eines rotierenden Werkzeugs mit hohem Druck auf die Schweißzone gepresst. Durch die aus der Reibung entstehende Wärme wird die Schweißzone plastifiziert. Das rotierende Werkzeug hat zusätzlich eine Rührspitze, die in den plastifizierten Werkstoff der zu verbindenden Bauteile eindringt und diesen verrührt. Da die plastifizierte Schweißzone unter hohem Druck steht, muss sie von einer geschlossenen Hülle aus festem Material umgeben sein. Falls diese Hülle um die plastifizierte Schweißzone eine Lücke aufweist, entweicht Werkstoff aus der Schweißzone, wobei der resultierende Druckverlust den Schweißvorgang unterbindet.

Das Reibrührschweißen von Hohlprofilen ist problematisch, weil im Falle eines Durchschweißens der gesamten Wanddicke plastifizierter Werkstoff in den Hohlraum entweicht und der Schweißvorgang unterbunden wird. Daher ist es üblich, die zu verbindenden Außenwände der Hohlprofile nicht in ihrer gesamten Dicke durchzuschweißen. Wenn die Außenwände von Hohlprofilen jedoch nur entlang eines Teils ihrer Wanddicke verschweißt werden, so verbleibt an der Wurzel der Schweißzone eine Kerbe. Rechnerisch ist eine solche Schweißnaht als Y-Naht zu betrachten. Die zulässigen Spannungen von Y-Nähten sind aufgrund der Kerbwirkung geringer als die von V-Nähten.

Durch das Dokument JP 2001 225178 A (Patent Abstracts of Japan, vol. 2000, no. 25, 12. April 2001) ist es bekannt, zwei Hohlprofile durch Reibrührschweißen zu verbinden, wobei diese Profile einander überlappende Wandungen aufweisen. Um Verformungen der Hohlprofile durch Druckkräfte des Schweißwerkzeuges (friction stir) zu vermeiden, ist im Hohlraum zwischen den besagten Wandungen ein als Hilfsprofil dienendes Stützelement spielfrei angeordnet, das die Schweißzone nicht abgedeckt. Bei dieser Verbindung besteht wegen der einander überlappenden Wandungen allerdings nicht das Problem, dass Werkstoff aus der Schweißzone entweicht.

Dem Dokument JP 11 192564 A (Patent Abstracts of Japan, vol. 1999, no. 12, 29. Oktober 1999) ist zu entnehmen, ein Hilfsprofil (reinforcing material 5) mit einem äußeren Querschnitt, der dem inneren Querschnitt der jeweiligen Hohlkammer von zwei Hohlprofilen entspricht, in diesen Hohlkammern so anzuordnen, dass die Schweißzone durch das Hilfsprofil abgedeckt ist. Das die Hohlkammern vollständig ausfüllende Hilfsprofil hat eine verstärkende Wirkung für die Verbindung der beiden Hohlprofile, wobei auch ein Anschweißen des Hilfsprofils vorgesehen ist (siehe Abbildung D von D2).

Der Erfindung liegt die Aufgabe zugrunde, eine Möglichkeit aufzuzeigen, wie auf einfache Weise die Außenwände von Hohlkammerprofilen entlang ihrer gesamten Wanddicke durchgeschweißt werden können.

Diese Aufgabe wird erfindungsgemäß durch ein Verfahren gemäß Anspruch 1 gelöst.

Durch diese Lösung können die Außenwände der Hohlkammerprofile entlang ihrer gesamten Wanddicke durchgeschweißt werden, wobei auch die holkammerseitigen Randfasern plastifiziert werden. Ein Druckverlust der Schweißzone zur Hohlkammer ist nicht möglich, weil der plastifizierte Werkstoff durch das eingeschobene Hilfsprofil abgeschirmt ist. Die erzeugte Schweißnaht ist rechnerisch als V-Naht zu betrachten. Da bei einer V-Naht die zulässigen Spannungen wesentlich höher sind als bei einer Y-Naht, kann die durch die Hohlkammerprofile gebildete Gesamtkonstruktion - beispielsweise ein in Integralbauweise hergestellter Wagenkasten eine Schienenfahrzeugs - hinsichtlich des Gewichts günstiger dimensioniert werden.

Nach einer bevorzugten Ausgestaltung der Erfindung ist vorgesehen, dass das Hilfsprofil und dementsprechend auch die durch die Wandungen der Hohlkammerprofile gebildete Halterung jeweils einen runden Querschnitt haben.

Gemäß einer weiteren Ausführungsform der Erfindung besteht das eingeschobene Hilfsprofil aus einem Werkstoff, dessen Schmelzpunkt größer ist als der Schmelzpunkt des Werkstoffs der Hohlkammerprofile. Wegen der Differenz der Schmelzpunkte wird bei dem Schweißvorgang das Hilfsprofil nicht plastifiziert. Das Hilfsprofil geht also keine Verbindung mit der Schweißzone ein und hat somit auch keine Verbindung mit den Hohlkammerprofilen. Das Hilfsprofil kann nach dem Schweißvorgang in den Hohlkammerprofilen eingeschoben bleiben, so dass es ohne weiteres möglich ist, beliebig lange Hohlprofile zu verschweißen.

Falls beispielsweise Hohlkammerprofile aus einer Aluminiumlegierung der 6000-er Serie zu verbinden sind, kann das Hilfsprofil aus Edelstahl bestehen, da Edelstahl einen höheren Schmelzpunkt hat als solche Aluminiumlegierungen. Alternativ kann das Hilfsprofil aus Keramik oder duroplastischem Werkstoff bestehen, sofern diese Werkstoffe ebenfalls den definiert höheren Schmelzpunkt haben.

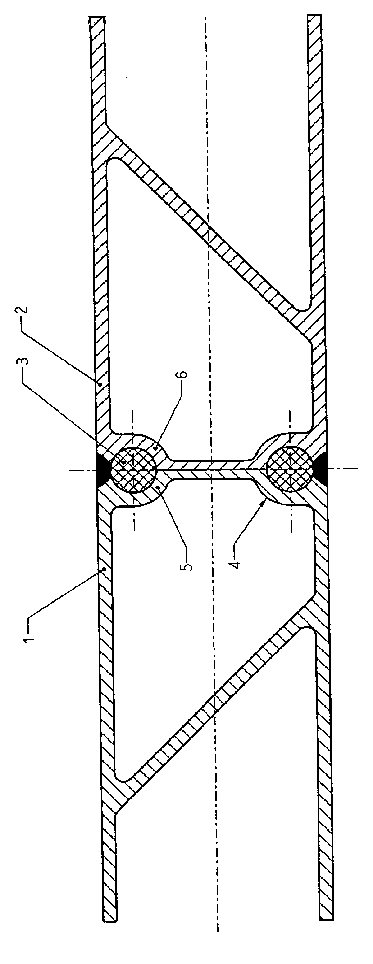

Im Weiteren wird die Erfindung anhand eines Ausführungsbeispiels näher beschrieben, das in der Zeichnung dargestellt ist. Die Zeichnung zeigt zwei Hohlkammerprofile 1, 2 im Querschnitt, die an ihren Außenwänden durch Reibrührschweißen verbunden sind.

Die Schweißzone der Hohlkammerprofile 1, 2 ist hohlkammerseitig durch ein Hilfsprofil 3 abgedeckt, das in eine Halterung 4 eingeschoben ist. Diese Halterung 3 wird durch an den Hohlkammerprofilen 1, 2 geformte Wandungen 5, 6 gebildet. Das Hilfsprofil 3 hat im Ausführungsbeispiel einen runden Querschnitt und besteht aus einem duroplastischen Werkstoff, dessen Schmelzpunkt größer ist als der Schmelzpunkt der z. B. aus einer Aluminiumlegierung hergestellten Hohlkammerprofile 1, 2.

## Patentansprüche

1. Reibrührschweißen von Hohlkammerprofilen (1, 2), mit Hilfe eines Werkzeugs, das eine gegen die Schweißzone der zu verbindenden Bauteile pressbare Stirnfläche und eine Rührspitze aufweist, wobei die Schweißzone hohlkammerseitig von einem zwischen die Hohlkammerprofile (1, 2) eingeschobenen Hilfsprofil (3) abgedeckt ist, **dadurch gekennzeichnet, dass** die Hohlkammerprofile (1, 2) direkt an der Schweißzone beginnende hohlkammerseitige Wandungen (5, 6) aufweisen, die eine entlang der Schweißzone ausgerichtete Halterung (4) für das zwischen diese Wandungen (5, 6) eingeschobene Hilfsprofil (3) bilden.

2. Reibrührschweißen nach Anspruch 1, **dadurch gekennzeichnet, dass** das Hilfsprofil (3) und dementsprechend auch die durch die Wandungen (5, 6) der Hohlkammerprofile (1, 2) gebildete Halterung (4) jeweils eine runden Querschnitt haben.

3. Reibrührschweißen nach Anspruch 1 oder 2, **dadurch gekennzeichnet, dass** das eingeschobene Hilfsprofil (3) aus einem Werkstoff besteht, dessen Schmelzpunkt größer ist als der Schmelzpunkt des Werkstoffs der Hohlkammerprofile (1, 2).

4. Reibrührschweißen nach Anspruch 3, **dadurch gekennzeichnet, dass** das Hilfsprofil (3) aus Edelstahl, Keramik oder einem duroplastischen Kunststoff besteht.

## Claims

1. Friction stir welding of hollow section members (1, 2), with the aid of a tool which has an end face that can be pressed against the welding zone of the components to be connected and a stirring tip, the welding zone being covered on the hollow chamber side by an auxiliary member (3) pushed in between the hollow section members (1, 2), **characterized in that** the hollow section members (1, 2) have walls (5, 6) on the hollow chamber side that begin directly at the welding zone and form a holder (4), aligned along the welding zone, for the auxiliary member (3) pushed in between these walls (5, 6).

2. Friction stir welding according to Claim 1, **characterized in that** the auxiliary member (3), and accordingly also the holder (4) formed by the walls (5, 6) of the hollow section members (1, 2), respectively have a round cross section.

3. Friction stir welding according to Claim 1 or 2, **characterized in that** the pushed-in auxiliary member (3) consists of a material with a melting point that is greater than the melting point of the material of the hollow section members (1, 2).

4. Friction stir welding according to Claim 3, **characterized in that** the auxiliary member (3) consists of high-grade steel, ceramic or a thermosetting plastic.

## Revendications

1. Soudage par friction et agitation de profilés (1, 2) à cavité à l'aide d'un outil qui a une face frontale pouvant être pressée sur la zone de soudure des éléments à relier et une pointe d'agitation, la zone de soudure étant recouverte du côté de la cavité d'un profilé (3) auxiliaire inséré entre les profilés (1, 2) à cavité, **caractérisé en ce que** les profilés (1, 2) à cavité ont des parois (5, 6) du côté de la cavité qui commencent directement à la zone de soudure et qui forment une pièce (4), dirigée le long de la zone de soudure, de maintien du profilé (3) auxiliaire inséré entre les parois (5, 6).

2. Soudure à friction et à agitation suivant la revendication 1, **caractérisé en ce que** le profilé (3) auxiliaire et en conséquence également la pièce (4) de maintien formée par les parois (5, 6) des profilés (1, 2) à cavité ont respectivement une section transversale circulaire.

3. Soudure à friction et à agitation suivant la revendication 1 ou 2, **caractérisé en ce que** le profilé (3) auxiliaire inséré est en un matériau dont le point de fusion est plus haut que le point de fusion du matériau des profilés (1, 2) à cavité.

4. Soudure à friction et à agitation suivant la revendication 3, **caractérisé en ce que** le profilé (3) auxiliaire est en acier fin, en céramique ou en une matière plastique thermodurcissable.
